# EUROPÄISCHE PATENTSCHRIFT

(11) **EP 0 951 410 B1**
(45) Veröffentlichungstag und Bekanntmachung des Hinweises auf die Patenterteilung: **28.07.2004**
(21) Anmeldenummer: 98959757.0
(22) Anmeldetag: 23.10.1998
(51) Int. Cl.: B60S 1/32, B60S 1/40

(54) **WISCHVORRICHTUNG FÜR SCHEIBEN VON KRAFTFAHRZEUGEN MIT EINEM LANGGESTRECKTEN, EINENDIG AM KRAFTFAHRZEUG GEFÜHRTEN, ANGETRIEBENEN WISCHERARM**
WIPER ASSEMBLY FOR MOTOR VEHICLE WINDOWS HAVING A LONGITUDINALLY EXTENDED, DRIVEN WIPER ARM WHICH IS GUIDED ON THE MOTOR VEHICLE AT ONE END
MONTURE D'ESSUIE-GLACE DE VEHICULES AUTOMOBILES COMPORTANT UN BRAS DE BALAI ALLONGE ENTRAINE ET GUIDE A UNE EXTREMITE SUR LE VEHICULE

(30) Priorität: 13.11.1997 DE 19750190
(43) Veröffentlichungstag der Anmeldung: 27.10.1999
(73) Patentinhaber: ROBERT BOSCH GMBH, 70442 Stuttgart (DE)
(72) Erfinder: KOTLARSKI, Thomas, D-77830 Bühlertal (DE)
(86) Internationale Anmeldenummer: PCT/DE1998/003112
(87) Internationale Veröffentlichungsnummer: WO 1999/025591

(56) Entgegenhaltungen:
- FR-A- 2 369 951
- US-A- 4 293 974

## Beschreibung

### Stand der Technik und Vorteile der Erfindung

Die Erfindung geht aus von einer Wischvorrichtung nach der Gattung des Anspruchs 1. Bei einer bekannten Wischvorrichtung dieser Art (DE-AS 19 05 352) ist die Anschlußvorrichtung für das Wischblatt aus einem Metallblech hergestellt und mit einer Steckmuffe versehen, in welche die massive, vorgefertigte verbindungsstange eingeführt und in einem weiteren Arbeitsgang befestigt werden muß. Neben dem dazu erforderlichen Verdickungsaufwand ist weiter nachteilig, daß diese Steckverbindung zwischen Anschlußvorrichtung und Verbindungsstange die während des Wischbetriebs zu beschleunigende und abzubremsende Masse unnötig erhöht, was durch eine entsprechende Auslegung der Antriebskomponenten der Wischvorrichtung berücksichtigt werden muß.

Ferner ist aus der FR-A-2 369 951 eine Wischvorrichtung für Scheiben von Kraftfahrzeugen bekannt, die die Merkmale der Oberbegriffe der Ansprüche 1 und 2 zeigt.

Bei der erfindungsgemäßen Wischvorrichtung mit den kennzeichnenden Merkmalen des Anspruchs 1 können die Anschlußvorrichtung für den Wischerarm und die Verbindungsstange in einem einzigen Arbeitsschritt hergestellt werden. Die Anordnung einer Steckmuffe entfällt.

Damit ergibt sich - auch hinsichtlich des Verzichts auf eine massive Verbindungsstange - eine Gewichtsminderung, die sich bei der Auslegung der Antriebskomponenten platzsparend und kostengünstig auswirkt.

Bei einer anderen bekannten Wischvorrichtung (DE 34 20 274 A1) gemäß der Gattung des Anspruchs 2, ist das im Querschnitt U-förmige, erste Gelenkteil des Klappgelenks aus einem Metallblech gefertigt und im Bereich eines Überlappungsabschnitts zwischen dem Gelenkteil und der massiven, vorgefertigten Verbindungsstange in einem weiteren Arbeitsgang mit dieser vernietet. Der dazu erforderliche Fertigungsaufwand ist erheblich. Darüber hinaus erhoht der Überlappungsabschnitt die während des Wischbetriebs zu beschleunigende und abzubremsende Masse, was die Auslegung der Antriebskomponenten verteuert.

Bei der erfindungsgemäßen Wischvorrichtung mit den kennzeichnenden Merkmalen des Anspruchs 2 können die Wischer-Verbindungsstange und das erste Gelenkteil des Klappgelenks kostengünstig in einem einzigen Arbeitsgang hergestellt werden. Besondere Befestigungsmittel und ein Überlappungsabschnitt können entfallen. Die sich daraus und aus dem Verzicht auf eine massive Verbindungsstange ergebende Gewichtsersparnis ermöglicht eine kostengünstige Auslegung der Antriebskomponenten der Wischvorrichtung.

Eine besonders fortschrittliche Weiterbildung der Erfindung ergibt sich, wenn die Wischerarm-Verbindungsstange, die Anschlußvorrichtung für das Wischblatt und das erste Gelenkteil des Klappgelenks einstückig aus einem Metallblech hergestellt sind, weil sich dann die Vorteile der vorgenannten Einzelmaßnahmen sinnvoll ergänzen.

Zur Erhöhung der Festigkeit des Wischerarms im Bereich der Wischerarm-Verbindungsstange ist diese durch Verformungen des Metallblechs versteift. Durch diese Verformungen können das Wischerstands- und das Biegemoment im gesamten Wischerarmbereich vervielfacht werden.

Weitere vorteilhafte Weiterbildungen und Ausgestaltungen der Erfindung sind in der nachfolgenden Beschreibung und in den dazugehörigen Zeichnung dargestellten Ausführungsbeispielen angegeben.

### Zeichnung

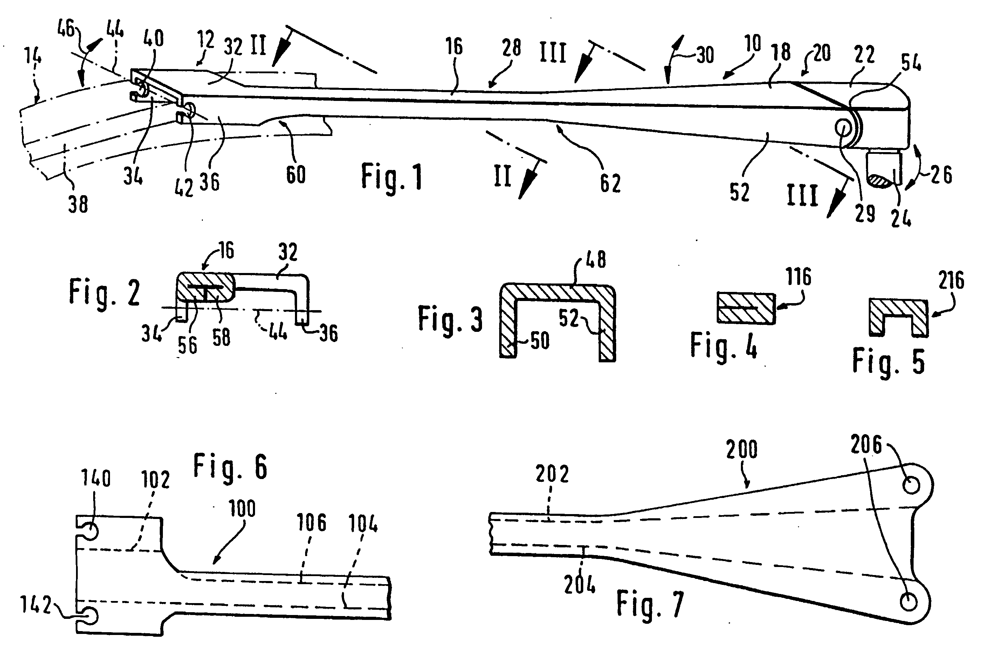

In der Zeichnung zeigen: Figur 1 einen zu einer Wischvorrichtung gehörenden Wischerarm mit dessen Antriebsmitteln und ein mit strichpunktierten Linien angedeutetes Wischblatt im perspektivischer Darstellung, Figur 2 einen Schnitt durch den Wischerarm gemäß Figur 1 entlang der Linie II-II, vergrößert dargestellt, Figur 3 die vergrößert dargestellte Schnittfläche eines Schnitts entlang der Linie III-III in Figur 1, Figur 4 eine andere, von Figur 2 abweichende Querschnittsausbildung des Wischerarms im Bereich der Wischerarm-Verbindungsstange, Figur 5 eine weitere mögliche, von Figur 2 abweichende Querschnittsausbildung des Wischerarms im Bereich der Wischerarm-Verbindungsstange, Figur 6 eine Draufsicht auf den Teil einer Metallblechplatine, aus welcher die Anschlußvorrichtung und die Verbindungsstange hergestellt wird und Figur 7 eine Draufsicht auf den Teil einer Metallblechplatine, aus welcher die Verbindungsstange und das erste Gelenkteil des Klappgelenks hergestellt wird.

### Beschreibung der Ausführungsbeispiele

Zu einem in Figur 1 dargestellten Wischerarm 10 gehören eine Anschlußvorrichtung 12, mit deren Hilfe ein strichpunktiert angedeutetes, langgestrecktes Wischblatt 14 gelenkig mit dem Wischerarm verbunden werden kann. Die Anschlußvorrichtung 12 ist an dem einen Ende einer Wischerarm-Verbindungsstange 16 angeordnet. Das andere Ende der Wischerarm-Verbindungsstange 16 ist mit einem ersten Gelenkteil 18 verbunden, das zu einem Klappgelenk 20 des Wischerarms gehört. Zum Wischerarm 10 gehört darüber hinaus noch ein zweites Gelenkteil 22, an welchem Antriebsmittel 24 für den Wischerarm 10 angreifen. Die Antriebsmittel sind durch eine in Richtung des Doppelpfeils 26 pendelnd angetriebene Wischerwelle gebildet. Die Anschlußvorrichtung 12 bildet zusammen mit der Wischerarm-Verbindungsstange 16 und dem ersten Gelenkteil 18 ein Klapphebel 28, der zusammen mit dem Wischblatt 14 um die im wesentlichen parallel zur Scheibenoberfläche liegende Gelenkachse 29 in Richtung des Doppelpfeils 30 geklappt werden kann, so daß das Wischblatt 14 von der Scheibe abnehmbar und wieder an diese anlegbar ist. Die Klappbewegung erfolgt also im wesentlichen in einer auf der Scheibenoberfläche stehenden Ebene. Die Wischerwelle 24 ist am Kraftfahrzeug gelagert und das zweite Gelenkteil 22 des Klappgelenks 20 bildet somit das antriebsseitige Ende des Wischerarms 10, an dessem freien Ende die Anschlußvorrichtung 12 angeordnet ist. Wie die Figuren 1 und 2 zeigen, hat die Anschlußvorrichtung 12 einen im wesentlichen U-förmigen Querschnitt. Die U-Basis 32 der Anschlußvorrichtung 12 befindet sich im wesentlichen in einer zur Scheibe parallelen Ebene. Die beiden U-Schenkel 34 und 36 erstrecken sich von der U-Basis 32 aus zur Scheibe. Zwischen den beiden mit Abstand voneinander befindlichen U-Schenkeln 34 und 36 der Anschlußvorrichtung 12 liegt das langgestreckte Wischblatt 14 mit einem Abschnitt seines Rückenteils 38, an dem nicht näher dargestellte Gelenkmittel, beispielsweise Gelenkzapfen angeordnet sind, welche in ebenfalls Gelenkmittel bildende Lagerausnehmungen 40 und 42 der Anschlußvorrichtung 12 ragen. Dabei sind die Gelenkmittel am Rückenteil 38 des Wischblatts 14 und die Lagerausnehmungen 40, 42 in den beiden U-Schenkeln 34, 36 der Anschlußvorrichtung 12 so angeordnet, daß sich eine Gelenkachse 44 ergibt, welche im wesentlichen parallel zur Scheibenoberfläche und quer zu den Längsachsen der längsachsenparallel liegenden Bauteile 14 und 28 der Wischvorrichtung liegt. Um diese Gelenkachse vermag das Wischblatt 14 eine Schwingbewegung (Doppelpfeil 46) auszuführen, mit welcher das Wischblatt sich der verändernden Oberflächenkontur insbesondere bei sphärisch gekrümmten Scheiben von Kraftfahrzeugen während des Wischbetriebs anzupassen vermag. Die beiden U-Schenkel 34 und 36 sorgen für eine ordnungsgemäße Führung des Wischblatts 14 während des Wischbetriebs.

Wie aus den Figuren 1 und 3 ersichtlich ist, weist das erste Gelenkteil 18 des Klappgelenks 20 ebenfalls einen U-förmigen Querschnitt auf. Es hat somit ebenfalls eine U-Basis 48 und zwei mit Abstand voneinander liegende U-Schenkel 50 und 52, die sich von der U-Basis zur Scheibe erstrecken. In diesen beiden U-Schenkeln 50 und 52 ist die klapphebelseitige Lagerung des Klappgelenks angeordnet, während das Gelenkteil 22 mit einem Ansatz 54 zwischen diese beiden U-Schenkel eintaucht und mit der antriebsseitigen Lagerung versehen ist.

Wie Figur 1 zeigt, ist der Klapphebel 28 aus einem einzigen Stück gefertigt. Die U-Basis 32 der Anschlußvorrichtung 12 geht in die Wischerarm-Verbindungsstange 16 über, welche ihrerseits in die U-Basis 48 des ersten Gelenkteils 18 übergeht. Auch die U-Schenkel 34 und 36 der Anschlußvorrichtung 12 setzen sich einstückig über die Wischerarm-Verbindungsstange 16 fort und gehen in die U-Schenkel 50, 52 des ersten Gelenkteils 18 über. Zur Versteifung der Wischerarm-Verbindungsstange 16 sind gemäß einer ersten Ausführungsform die U-Schenkel 34, 36 der Anschlußvorrichtung 12 und die U-Schenkel 50, 52 im Bereich der Wischerarm-Verbindungsstange 16 mit ihren freien Enden 56 und 58 gegeneinander gefaltet, wie dies aus Figur 2 ersichtlich ist. Diese Versteifungsfaltung wird in den Übergangsbereichen 60 zwischen Anschlußvorrichtung 12 und der Wischerarm-Verbindungsstange 16 bzw. im Übergangsbereich 62 zwischen der Wischerarm-Verbindungsstange 16 und dem ersten Gelenkteil 18 allmählich gebildet. Unabhängig von der in Figur 2 dargestellten Ausführungsform der Versteifungsformung der Wischerarm-Verbindungsstange 16 kann eine solche auch gemäß den Figuren 4 (11b) bzw. 5 (21b) ausgeführt werden. Weitere Ausführungsformen der Faltung sind denkbar. Zweck aller möglichen Verformungen ist es, die erforderliche Steifigkeit des Klapphebels 28 zu erzielen. Dazu kann natürlich auch die Wahl der Dicke des Metallblechs beitragen, aus welchen der gesamte Klapphebel 12, 16, 18 einstückig hergestellt ist.

Unabhängig von der in Figur 1 gezeichneten Ausführungsform des Klapphebels 28 bzw. 12, 16,18 ist auch denkbar, daß an die Wischerarm-Verbindungsstange 16 lediglich die Anschlußvorrichtung 12 einstückig angeformt ist und daß die Anordnung des ersten Gelenkteils 18 in konventioneller Weise, so wie sie beim Stand der Technik offenbart ist, ausgeführt wird. Andererseits ist es auch denkbar, lediglich Wischerarm-Verbindungsstange 16 zusammen mit dem ersten Gelenkteil 18 einstückig herzustellen und die Anschlußvorrichtung 12 in der aus dem Stand der Technik bekannten Weise mit der Wischerarm-Verbindungsstange 16 zu verbinden.

In Figur 6 ist die prinzipielle Form einer metallischen Blechplatine 100 dargestellt, wobei die gestrichelten Linien 102, 104, 106, die Biegekanten angeben, in welchen die Platine 100 gebogen bzw. gefaltet wird. Bei entsprechender Faltung kann sich aus der Darstellung gemäß Figur 6 entweder ein Querschnitt der Wischerarm-Verbindungsstange 16 gemäß Figur 2 oder ein Querschnitt der Wischerarm-Stange 216 gemäß Figur 5 ergeben. In der Blechplatine 100 können schon Aussparungen 140, 142 angeordnet sein, welche nach dem Biegevorgang die Lagerausnehmungen 40, 42 der Anschlußvorrichtung 12 ergeben.

Eine in Figur 7 dargestellte metallische Blechplatine 200 hat die Ausgangsform zur einstückigen Fertigung der Wischerarm-Verbindungsstange 16 und des ersten Gelenkteils 18. Dazu muß die Blechplatine 200 entsprechend den mit gestrichelten Linien angegebenen Biegekanten 202 und 204 gefaltet bzw. gebogen werden. Es ergibt sich dann im Bereich des ersten Gelenkteils eine U-Form gemäß Figur 3, während die Faltung im Bereich der wischerarmverbindungsstange 16 entsprechend der Ausführung gemäß Figur 2 oder der Ausführung gemäß Figur 5 gewählt werden kann. Wie aus Figur 7 weiter ersichtlich ist, können in der Blechplatine 200 auch gleichzeitig Lagerausnehmungen 206 angeordnet werden, welche nach der Endmontage zusammen mit entsprechenden Lagermittel und dem zweiten Gelenkteil 22 (Figur 1) das Klappgelenk 20 ergeben.

Fügt man die beiden Blechplatinen 100 und 200 gemäß den Figuren 5 und 6 direkt aneinander, ergibt sich eine einzige Blechplatine, welche bei entsprechender Faltung und Verformung einen Klapphebel 28 gemäß Figur 1 ergibt.

In allen Fällen ergibt sich ein flachbauender, kostengünstig herzustellender wischerarm mit einem ansprechenden Design und einem geringen Gewicht, der bei entsprechender Wahl der Materialdicke und/oder bei einer entsprechenden Ausgestaltung des Querschnitts im Bereich der Wischerarm-Verbindungsstange 16 die erforderliche Steifigkeit aufweist.

## Patentansprüche

1. Wischvorrichtung für Scheiben von Kraftfahrzeugen mit einem langgestreckten, einendig am Kraftfahrzeug geführten, angetriebenen Wischerarm (10), an dessen anderen, freien Endabschnitt ein auf die Scheibe auflegbares, langgestrecktes Wischblatt (14) längsachsenparallel und um eine zur Scheibenebene im wesentlichen parallel und quer zur zu den Längsachsen ausgerichtete Schwingachse (44) pendelbar angelenkt ist, wobei das Wischblatt (14) mit einem Abschnitt zwischen zwei mit Abstand voneinander angeordneten Schenkeln (34, 36) einer im Querschnitt U-förmigen Anschlußvorrichtung (12) geführt ist, die Gelenkmittel des Wischblatts (14) mit Gelenkmitteln der am einen Ende einer Wischerarm-Verbindungsstange (16) angeordneten Wischblatt-Anschlußvorrichtung (12) zusammenarbeiten und die Verbindungsstange (16) an ihrem anderen Ende mit einem zu einem Klappgelenk (20) gehörenden ersten Gelenkteil (18) versehen ist, an dessen anderem, zweiten Gelenkteil (22) die Antriebsmittel (24) der Wischvorrichtung angreifen und die Wischerarm-Verbindungsstange (16) und die Anschlußvorrichtung (12) für das Wischblatt (14) einstückig aus einem Metallblech hergestellt sind, **dadurch gekennzeichnet, daß** im Bereich der Wischerarm-Verbindungsstange (16) das Metallblech 2-lagig gefaltet ist.

2. Wischvorrichtung für Scheiben von Kraftfahrzeugen mit einem langgestreckten, einendig am Kraftfahrzeug geführten, angetriebenen Wischerarm (10), an dessen anderem, freien Endabschnitt ein auf die Scheibe auflegbares, langgestrecktes Wischblatt (14) längsachsenparallel und um eine zur Scheibenebene im wesentlichen parallel und quer zu den Längsachsen ausgerichtete Schwingachse (44) pendelbar angelenkt ist und der Wischerarm (10) zwischen der Schwinglagerung des Wischblatt (14) und seinem einen, antriebsseitigen Ende ein Klappgelenk (20) aufweist, dessen eines, im Querschnitt U-förmiges Gelenkteil (18) am einen Ende einer Wischerarm-Verbindungsstange (16) befestigt ist, an deren anderen Ende die wischerblattseitigen Schwinglagermittel angeordnet sind und an dessem einen Gelenkteil (22) die Antriebsmitttel (24) der Wischvorrichtung angreifen und die Wischerarm-Verbindungsstange (16) und das erste Gelenkteil (18) des Klappgelenks (20) einstückig aus einem Metallblech hergestellt sind, **dadurch gekennzeichnet, daß** im Bereich der Wischerarm-Verbindungsstange (16) das Metallblech 2-lagig gefaltet ist

3. Wischvorrichtung nach den Ansprüchen 1 und 2, **dadurch gekennzeichnet, daß** die Wischerarm-Verbindungsstange (16 bzw. 116 bzw. 216) die Anschlußvorrichtung (12) für das Wischblatt (14) und das erste Gelenkteil (18) des Klappgelenks (20) einstückig aus einem Metallblech hergestellt sind.

4. Wischvorrichtung nach einem der Ansprüche 1 bis 3, **dadurch gekennzeichnet, daß** die Wischerarm-Verbindungsstange (16 bzw. 116 bzw. 216) durch Verformungen des Metallblechs versteift ist.

5. Wischvorrichtung nach einem der Ansprüche 1 bis 4, **dadurch gekennzeichnet, daß** das Metallblech im Bereich der Wischerarm-Verbindungsstange (16) mit seinen freien Enden (56, 58) gegeneinander gefaltet ist.

## Claims

1. Wiper device for windows of motor vehicles, having an elongate, driven wiper arm (10) which is guided at one end on the motor vehicle and on the other, free end section of which an elongate, wiper blade (14), which can be placed against the window, is articulated parallel to the longitudinal axis and in a manner such that it can swing about a swivel axis (44) aligned essentially parallel to the plane of the window and transversely to the longitudinal axes, the wiper blade (14) being guided with one section between two limbs (34, 36), which are arranged at a distance from each other, of a connecting device (12), which is U-shaped in cross section, the articulated means of the wiper blade (14) interacting with articulated means of the wiper-blade connecting device (12), which is arranged at the one end of a wiper-arm connecting rod (16), and the connecting rod (16) being provided at its other end with a first articulated part (18), which belongs to a folding joint (20) and the other, second articulated part (22) of which has the driving means (24) of the wiper device acting upon it, and the wiper-arm connecting rod (16) and the connecting device (12) for the wiper blade (14) being produced integrally from a metal sheet, **characterized in that** the metal sheet is folded in two layers in the region of the wiper-arm connecting rod (16).

2. Wiper device for windows of motor vehicles, having an elongate, driven wiper arm (10) which is guided at one end on the motor vehicle and on the other, free end section of which an elongate wiper blade (14), which can be placed against the window, is articulated parallel to the longitudinal axis and in a manner such that it can swing about a swivel axis (44) aligned essentially parallel to the plane of the window and transversely to the longitudinal axes, and the wiper arm (10) having a folding joint (20) between the swivel mounting of the wiper blade (14) and its one end on the drive side, the one articulated part (18), which is U-shaped in cross section, of the said folding joint being fastened to the one end of a wiper-arm connecting rod (16), at the other end of which the swivel mounting means on the wiper-blade side are arranged, and the one articulated part (22) of which has the driving means (24) of the wiper device acting upon it, and the wiper-arm connecting rod (16) and the first articulated part (18) of the folding joint (20) being produced integrally from a metal sheet, **characterized in that** the metal sheet is folded in two layers in the region of the wiper-arm connecting rod (16).

3. Wiper device according to Claims 1 and 2, **characterized in that** the wiper-arm connecting rod (16 or 116 or 216), the connecting device (12) for the wiper blade (14) and the first articulated part (18) of the folding joint (20) are produced integrally from a metal sheet.

4. Wiper device according to one of Claims 1 to 3, **characterized in that** the wiper-arm connecting rod (16 or 116 or 216) is stiffened by deformations of the metal sheet.

5. Wiper device according to one of Claims 1 to 4, **characterized in that** the metal sheet is folded with its free ends (56, 58) against each other in the region of the wiper-arm connecting rod (16).

## Revendications

1. Monture d'essuie-glace de véhicules automobiles comportant un bras de balai (10) allongé entraîné et guidé à une extrémité sur le véhicule, dont l'autre segment d'extrémité libre comporte un balai d'essuie-glace (14) allongé pouvant se poser sur la vitre, parallèle à l'axe longitudinal, et articulé à la façon d'un pendule sur un axe de basculement (44) pour l'essentiel parallèle à la surface de vitre et aligné en biais par rapport à l'axe longitudinal, le balai d'essuie-glace (14) étant guidé par un segment entre deux épaulements (34, 36) disposés de façon espacée d'un dispositif de raccordement (12) de section transversale en forme de U, les moyens d'articulation du balai d'essuie-glace (14) fonctionnant avec des moyens d'articulation du dispositif de raccordement de balai d'essuie-glace (12) disposé à une extrémité d'une tige de liaison de bras de balai (16), alors que la tige de liaison (16) est pourvue à son autre extrémité d'une première pièce d'articulation (18) appartenant à une articulation repliable (20), dont l'autre deuxième pièce d'articulation (22) est saisie par les moyens d'entraînement (24) de la monture d'essuie-glace, la tige de liaison de bras de balai (16) et le dispositif de raccordement (12) du balai d'essuie-glace (14) étant fabriqués d'un seul tenant à partir d'une tôle de métal,
**caractérisée en ce que**
la tôle de métal est repliée sur deux couches dans la zone de la tige de liaison de bras de balai (16).

2. Monture d'essuie-glace de véhicules automobiles comportant un bras de balai (10) allongé entraîné et guidé à une extrémité sur le véhicule, dont l'autre extrémité libre comporte un balai d'essuie-glace (14) allongé pouvant se poser sur la vitre, parallèle à l'axe longitudinal, et articulé à la façon d'un pendule sur un axe de basculement (44) pour l'essentiel parallèle à la surface de vitre et aligné en biais par rapport à l'axe longitudinal, le bras de balai (10) présentant entre le palier de basculement du balai d'essuie-glace (14) et une extrémité côté entraînement une articulation repliable (20) dont une pièce d'articulation (18) de section en forme de U est fixée à l'une des extrémités d'une tige de liaison de bras de balai (16), dont l'autre extrémité comporte les moyens de palier de basculement côté balai d'essuie-glace, et dont la pièce d'articulation (22) est saisie par les moyens d'entraînement (24) de la monture d'essuie-glace, la tige de liaison de bras de balai (16) et la première pièce d'articulation (18) de l'articulation repliable (20) étant fabriquées d'une seule pièce à partir d'une tôle de métal,
**caractérisée en ce que**
la tôle de métal est repliée sur deux couches dans la zone de la tige de liaison de bras de balai (16).

3. Monture d'essuie-glace selon les revendications 1 et 2,
**caractérisée en ce que**
la tige de liaison de bras de balai (16 ou 146 ou 216), le dispositif de raccordement (12) du balai d'essuie-glace (14) et la première pièce d'articulation (18) de l'articulation repliable (20) sont fabriqués d'une seule pièce à partir d'une tôle de métal.

4. Monture d'essuie-glace selon lune quelconque des revendications 1 à 3,
**caractérisée en ce que**
la tige de liaison de bras de balai (16 ou 146 ou 216) est rigidifiée par des déformations de la tôle de métal.

5. Monture d'essuie-glace selon l'une quelconque des revendications 1 à 4,
**caractérisée en ce que**
la tôle de métal est repliée dans la zone de la tige de liaison de bras de balai (16) par ses extrémités libres (56, 58) l'une contre l'autre.
